(19) Europäisches Patentamt
European Patent Office
Office européen des brevets

(11) **EP 1 664 611 B1**

(12) **EUROPEAN PATENT SPECIFICATION**

(45) Date of publication and mention
of the grant of the patent:
**11.03.2009 Bulletin 2009/11**

(21) Application number: **04766287.9**

(22) Date of filing: **22.07.2004**

(51) Int Cl.:
*F16L 23/036* (2006.01)   *F16L 37/12* (2006.01)

(86) International application number:
**PCT/EP2004/051573**

(87) International publication number:
**WO 2005/026601 (24.03.2005 Gazette 2005/12)**

(54) **COUPLABLE FLANGE WITH CLAMPING JAWS FOR THE CONNECTION OF PIPES FOR THE TRANSPORT OF PETROCHEMICAL FLUIDS, GASES AND LIQUEFIED GASES**

KUPPELBARER FLANSCH MIT KLEMMBACKEN ZUR VERBINDUNG VON ROHREN FÜR DEN TRANSPORT VON PETROCHEMISCHEN FLUIDEN, GASEN UND VERFLÜSSIGTEN GASEN

BRIDE POUVANT ETRE COUPLEE A DES MORS DE SERRAGE POUR LE RACCORDEMENT DE CONDUITES DESTINEES AU TRANSPORT DE LIQUIDES PETROCHIMIQUES, DE GAZ ET DE GAZ LIQUEFIES

(84) Designated Contracting States:
**AT BE BG CH CY CZ DE DK EE ES FI FR GB GR HU IE IT LI LU MC NL PL PT RO SE SI SK TR**
Designated Extension States:
**LT LV**

(30) Priority: **17.09.2003 IT MI20031772**

(43) Date of publication of application:
**07.06.2006 Bulletin 2006/23**

(73) Proprietor: **Bormioli, Lorenzo**
**35100 Padova (IT)**

(72) Inventor: **Bormioli, Lorenzo**
**35100 Padova (IT)**

(74) Representative: **Mittler, Enrico**
**Mittler & C. s.r.l.**
**Viale Lombardia, 20**
**20131 Milano (IT)**

(56) References cited:
**DE-A- 2 833 866     DE-A- 4 318 831**
**DE-C- 90 977**

**Description**

The present invention concerns a pipe flange which is engageable by clamping jaws for the connection of pipes for the transport of petrochemical fluids, gases and liquefied gases.

The connection between pipes is a rather delicate operation especially in extreme conditions; as for example when one must import or export petrochemical fluids or the like between a ship and a tank located on the firm earth, between two ships in open sea or even between two lengths of pipes that extend above or underwater at a depth of several meters.

Connection systems, made up of centring and coupling devices, must prevent possible losses of transported product, which can be extremely negative at economic levee for the safety of the personnel and of the installations, and highly polluting for marine and terrestrial environment in the vicinities of the installation.

In addition said connection systems must be extremely flexible and comfortable for the operator in the coupling stage and quick in the uncoupling. This because, especially in open sea, meteorological condition that influence the state of the sea can worsen even quickly, thus imposing the necessity of quick uncoupling of the pipe connection system, therefore compromising the safety of the transport of petrochemical fluids and gases. In a few moments one must be able to stop the flow of fluid and to uncouple the pipes.

US-A-3558161 describes a pipe connection device which comprises a plurality of jaws opportunely controlled by elastic rods connected with a hydraulic or mechanical type control system. The closing control leads said jaws to "get hold of the flange of the pipe thus guaranteeing its watertightness.

The surface of this generic flange on which the jaw rests is normally flat and perpendicular to the longitudinal axis of the apparatus, so that during the uncoupling stage the moment of the force, caused by the friction between flange and jaw, which resists to the uncoupling increases progressively, in some case, even leading to compromise the same uncoupling, the latter being an absolutely not tolerable possibility in the extreme situations in which said coupling/uncoupling systems must operate.

This is also shown in DE-A-2833866 and DE-C-90977.

In mathematical terms, for the uncoupling to occur, the product between the applied force R and its arm "a" (opening moment) must always be always greater than the product between the friction force $F_a$ and its arm "b" (resistant moment). That is:

$$R * a > F_a * b$$

For the jaw to open such inequality must remain as such. It has however been verified that during the opening with flange having flat surface, the arm "a" decreases to the point that said inequality cannot be true any longer, in particular when the geometry of the jaw has been chosen in order as to resist strong loads.

Object of the present invention is to provide a flange conformed in such a way as to determine a jaw-flange connection that eliminates in simple and inexpensive way the aforesaid problem.

According to the invention such object is attained with a flange for pipes for the transport of petrochemical fluids, gases and liquefied gases, as defined in claim 1.

In this way the progressive decrease of the arm "a" during the uncoupling stage is compensated by a variation in the force components that is in favour of the opening of the jaw.

These and other characteristics of the present invention will become evident from the following detailed description of an embodiment thereof that is illustrated as a non limiting example in the enclosed drawings, in which:

Figure 1 shows a side view of the flange-jaw coupling according to the present invention in closing position;
Figure 2 shows a side view in magnified scale of the flange-jaw coupling zone in Figure 1;
Figure 3 shows a side view of the flange-jaw coupling with the jaw rotated by 6° in the opening sense;
Figure 4 shows a side view in magnified scale of the flange-jaw coupling zone in Figure 3;
Figure 5 shows a side view of the flange-jaw coupling with the jaw rotated by 10° in the opening sense;
Figure 6 shows a side view in magnified scale of the flange-jaw coupling zone in Figure 5;

In the drawings a flange 1 comprises a surface 11 with curved peripheral portion 2 on which a jaw 3 rests which is hinged to a bracket 4 of a pipe coupling 12 by means of a pin 5 as regards which it is free to rotate.

The movement of the jaw 3 is exerted by a spring 6 controlled to move between a closing position coplanar to the axis of the coupling to an opening position inclined as regards to it by the rotation of a ring or fifth wheel 10 opportunely controlled by hydraulic systems or the like.

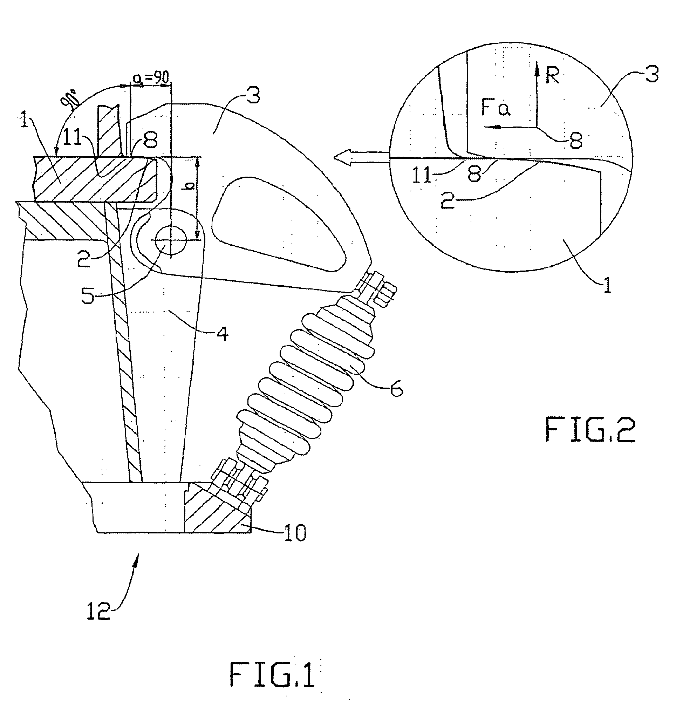

The advantages of the present invention are identifiable by analysing the forces which interact in the flange-jaw contact zone 8 (Figures 2, 4, 6).

In Figures 1 and 2, which show purely exemplified values for "a" and "b", the equilibrium equation is the following:

$$R * a = F_a * b$$

where:

R = force of contact between flange and jaw

$F_a$ = force of friction generated by R ($F_a = R \times f$, where f is the coefficient of friction between metals of the jaw flange coupling)

In order to make the jaw rotate in the opening sense, by applying the load R, it is necessary that: $R * a > F_a * b$

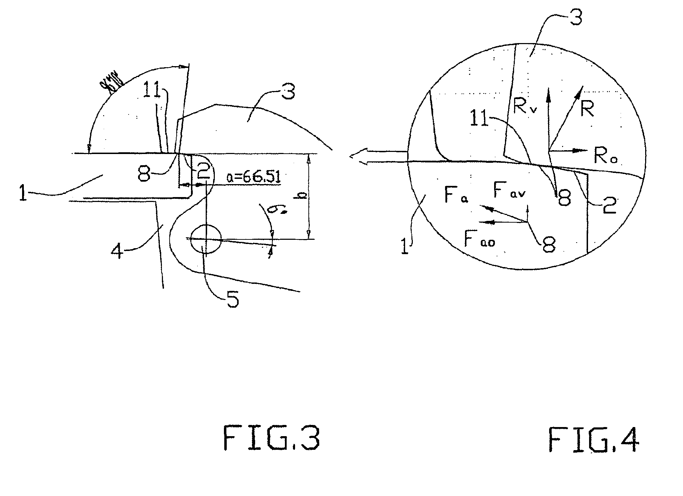

In the situation of Figures 3 and 4 the rotation of the jaw involved an inclination of $F_a$ and R of which it is possible to distinguish the horizontal ($F_{ao}$ and $R_o$) and vertical ($F_{av}$ and $R_v$) components.

In order for the jaw to open it is now necessary that:

$$(R_v * a) + (R_o * b) > (F_{ao} * b) - (F_{av} * a)$$

As compared with the situation in Figure 1-2 the left part of the disequation decreased by virtue of the decrease in the arm to (b remained equal), but such decrease is compensated by the reduction of the friction force $F_{ao}$ and by the generation of a vertical component $F_{av}$ favourable to the opening of the jaw 3, therefore the product between $F_{ao}$ and the b in Figure 3-4 is smaller than the one between $F_a$ and the b in Figure 1-2.

If the contact surface of the flange had been flat, the product between $F_a$ and b would have remained constant whereas the one between R and a would have been decreased because of the reduction of a, with the consequent risk of having at a certain point:

$$R * a < F_a * b$$

therefore the opening of the jaw could have been blocked.

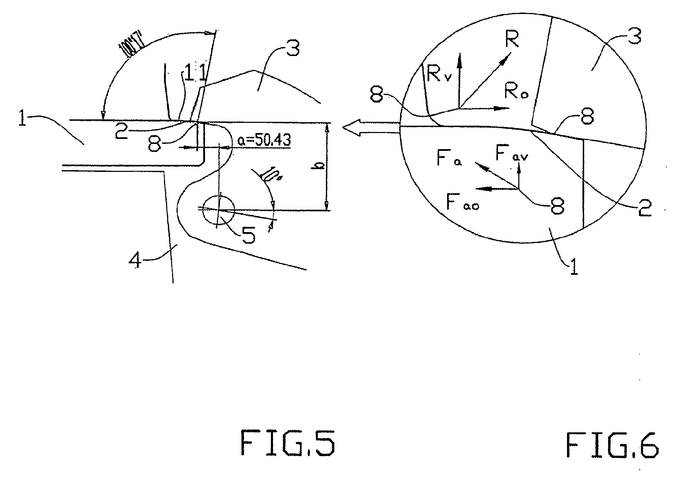

In the situation of Figures 5-6 the jaw has been additionally rotated with the result that as compared with the case in Figure 3-4 $F_{av}$ (component in favour of the opening) has increased whereas $F_{ao}$ (component which opposes to the opening) has decreased.

The disequation

$$(R_v * a) + (R_o * b) > (F_{ao} * b) - (F_{av} * a)$$

is thus verified for the entire opening rotation of the jaw.

In short the profile of the flange is made as a function of the aforesaid disequation, with the aim to make it result always valid during the opening of the jaw 3.

**Claims**

**1.** Flange (1) for pipes for the transport of petrochemical fluids, gases and liquefied gases, comprising a bearing surface (11) for engagement by a clamping jaw (3) supported by a joining pipe (12), **characterised in that** said bearing surface (11) comprises a curved peripheral portion sloping in the direction of support of the clamping jaw (3) by the joining pipe (12).

**Patentansprüche**

**1.** Flansch (1) für Rohre zum Transport von petrochemischen Fluiden, Gasen und verflüssigten Gasen, welcher eine Auflagefläche (11) zum Zusammenarbeiten mit einer Klemmbacke (3) aufweist, welche an einem Verbindungsrohr (12) gelagert ist, **dadurch gekennzeichnet, dass** die Auflagefläche (11) einen gekrümmte Umfangsabschnitt hat, welcher in Richtung der Lagerung der Klemmbacke (3) an dem Verbindungsrohr (12) geneigt verläuft.

**Revendications**

**1.** Bride (1) pour conduites destinées au transport de fluides pétrochimiques, de gaz et de gaz liquéfiés, comprenant une surface de support (11) destinée à être en contact avec une griffe de serrage (3) supportée par une conduite de jonction (12), **caractérisée en ce que** ladite surface de support (11) comprend une partie périphérique courbée inclinée dans la direction de support de la griffe de serrage (3) par la conduite de jonction (12).

FIG.1

FIG.2

FIG.3

FIG.4

FIG.5          FIG.6

**EP 1 664 611 B1**

**Patent documents cited in the description**

- US 3558161 A
- DE 2833866 A
- DE 90977 C